# EUROPEAN PATENT APPLICATION

(11) **EP 1 475 755 A1**
(43) Date of publication of application: **10.11.2004**
(21) Application number: 03077883.1
(22) Date of filing: 12.09.2003
(51) Int. Cl.: G07C 15/00, G06F 17/60, H04M 11/06, H04M 3/42, H04L 29/06

(54) **Lottery system with mobile access**

(30) Priority: 05.05.2003 EP 03076337
(71) Applicant: Openlot Systems B.V., 1017 WT Amsterdam (NL)
(72) Inventor: Selman, Tijmen Jan Hendrik, 1075 CB Amsterdam (NL)
(74) Representative: Riemens, Roelof Harm

(57) **Abstract**

A method for transferring data between a lottery system and a participant to the lottery system is described. The participant participates in a lottery game via a mobile communication device such as a mobile telephone. The method comprises the steps of transferring a non confidential part of the data between the communication device and the system via a first communication channel, such as a SMS channel. In response to the transfer of the non confidential part of the data, a confidential part of the data is transferred between the participant and the system via a second, secure communication channel, such as a voice response channel, a wireless access protocol (WAP channel) or an internet connection.

## Description

The invention relates to a method for transferring data between a lottery system and a participant to the lottery system, the participant communicating with the lottery system via a mobile communication device such as a mobile telephone. Further, the invention relates to a computer program comprising program instructions for, when loaded into a computer system, carrying such method. Also, the invention relates to a lottery system comprising a computer provided with such computer program.

DE-10018540 describes a method for a transfer of data in a lottery system. This publication intends to provide a solution for the problem that transfer of data via an internet connection can easily lead to security problems. Therefore, according to this publication, instead of the internet connection, a connection via a mobile telephone network is used. Data can be transferred in the lottery system via Short Message Service (SMS), the user e.g. entering data such as a PIN code for identifying himself and further numbers or letters, such as for choosing the type of game, which data is then transferred via SMS. For payment, the user will be called back by the system, the system mentioning the costs of the game, while inviting the user to enter a second PIN code for confirmation. As an alternative to the payment module calling back the user for verification of the second PIN code for confirming payment, it is possible that the user enters the second PIN code for confirmation of payment during the same connection as used for entering the first PIN code and entering the numbers. Then, costs associated with the game will be subtracted from a bank account of the user. Also, the publication describes that numbers for a game will be entered by the user and sent via SMS to the system. Further, results of a play are typically announced to a user by sending a SMS. As an alternative to the announcement of results of a game via SMS, the publication mentiones the possibility to announce results via voicemail or electronically, which however is not further detailed in this publication.

A problem is that the sending of confidential information via a SMS connection is, despite that the above publication presents this as a solution for secure transfer of data, in general not considered secure. Therefore, sending of confidential data, such as a PIN-code for identifying a user or for confirmation of a payment, numbers with which a user intends to play, and even results of a play, is considered a severe risk and therefore in a lot of countries not legally allowed.

An object of the invention is to provide a more secure data transfer.

To achieve this object, the method according to the invention comprises the steps of a) transferring a non confidential part of the data between the communication device and the system via a first communication channel and b) in response to the transfer of the non confidential part of the data, transferring a confidential part of the data between the participant and the system via a second, secure communication channel. Thus, a first, non-confidential part of the data is transferred via a first communication channel, which can for example comprise a SMS, MMS or EMS channel. As the first communication channel is only applied for transferring a non-confidential part of the data, the first communication channel does not need to be secure. In response to the transfer of the first, non-confidential part of the data, transfer of the second, confidential part of the data is initiated which takes place via a secure communication channel. The second, secure communication channel for example comprises a voice response channel between the communication device and system, an internet connection, which can be provided with data encryption or data coding means which are known per se, or a Wireless Access Protocol (WAP) channel. Consequently ease of use can be maintained as transfer of data is initiated by transferring a part of the data (a non-confidential part) via the first communication channel, in response to which transfer of confidential data via the secure communication channel takes place. When the first communication channel for example comprises an SMS channel, ease of use is provided, as a user can transfer the non-confidential part of the data in a known and easy way, while in response to this transfer, a second, secure communication channel is set up for transfer of the confidential part of the data.

In this document, the term non-confidential data refers to data such as a name of a participant, a telephone number of the participant, a "play" message for initiating participation in a game, or any other data for which no protection is required. The term confidential data in this document refers to data such as a bank account number of a participant, a financial transaction for booking money onto the account or on an electronic wallet, an amount of money on the bank account or in the wallet, numbers or other participant specific data comprised in a lottery ticket of the participant, information about a price won by the participant, etc..

A distinction between confidential and non-confidential data is also to be made on the basis of legal requirements: data which is in a certain country regarded as non-confidential may be transferred via the first communication channel, while data that is regarded as confidential thus may not be distributed freely by the operator of the lottery system or the telecom operator, is to be transferred via the second, secure communication channel. The method may thus include the step of classifying data as confidential or non-confidential. After classification of the data, the data to be transferred can be transferred via the first communication channel if classified as non-confidential. If however the data to be transferred appears to be classified as confidential, it will be transferred via the second, secure communication channel. If the second, secure communication channel has not yet been set up between the communication device of the participant and the system, it will be set up prior to transferring the data.

Advantageously, step b) is initiated by the system or by the communication device. Thus the participant does not need to take any action himself, for initiating set up of the second, secure communication channel, which makes the method user friendly. In general, and in particular when step b) is initiated by the system, no intelligence is required in the mobile communication device, the communication device being able to be involved in the method according to the invention making use of standard protocols and standard provisions provided in the mobile communication device, such as a mobile telephone, a GSM mobile telephone, or any other equipment being able to communicate via a mobile communication protocol.

Advantageously, step b) comprising the steps of b1) sending a message by the system to the communication device requesting the participant to enter specified data, and b2) receiving by the system the data from the communication device, upon entry of the specified data by the participant. Thus, all intelligence is kept in the central system, as the central system sends a message to the communication device requesting the participant to enter specified data which is followed by a transfer of the specified data, or a non-confidential part thereof, from the communication device to the system, via the second, secure communication channel. The message send by the system for requesting the participant to enter specified data can be send either via the first communication channel, or via the second, secure communication channel. Consequently, all intelligence is kept in the central system so that the mobile communication device can be dump or insecure. It is not required that the mobile communication device explains the rules, encrypts messages, etc..

Advantageously, step a) comprises the step of:
a1) sending a confirmation message from the system to the mobile communication device that a ticket for participating in a game is generated; and step b) comprises the step of:
b3) sending ticket data comprised in the ticket via the second communication channel to the communication device. This solved the problem that in some countries, the numbers that are played for or teams that are bet on in a betting situation do need to be secure for privacy reasons. This problem is solved as the participant is only allowed to order a selection of random numbers. The central system generates random numbers or any other random combination in accordance with the ticket requested by the participant. The request for a ticket can be sent via the first communication channel as such request is normally not considered confidential information. Also, the confirmation message is normally not considered confidential information and thus is transferred via the first communication channel. The ticket data however, comprising e.g. the numbers with which the participant will play in the game, or any other relevant data for the play in the game, is advantageously send to the participant via the second, secure communication channel. It is possible that the participant by means of the communication device initiates the sending of the ticket data via the second communication channel, by e.g. calling a telephone number associated with a voice response system. The participant is invited by the voice response system, to for example first enter a PIN code, and the lottery system then checks in a database if the PIN code and e.g. a number identification of the mobile device used by the participant for calling the voice response system, correspond to a telephone number and a PIN code in the database. Then, the system will read the numbers to the participant.

Advantageously, the system waits for a receipt of an accept message from a telecom operator, prior to issuing a lottery ticket for the participant. In this manner, security can be further increased, as in case of a mobile communication device, which is stolen, in case of a participant not paying (telecom or lottery) bills, or any other circumstance that might put the transaction to issue a lottery ticket at doubt, no accept message will be provided, and thus no lottery ticket will be issued.

Advantageously, the method comprises the further steps of c) detecting by the system a telephone number of the mobile communication device, d) comparing the telephone number against a telephone number stored in user data of the participant, and e) enabling transfer of data when the detected telephone number matches the stored telephone number. Thus, a simple, effective means for further verification of the authenticity of the participant is provided by comparing the telephone number with a telephone number stored in user data of the participant.

Advantageously, the method comprises the further steps of f) transferring a PIN code entered by the participant via the second communication channel to the system, g) comparing the PIN code against a PIN code stored in user data of the participant and h) enabling transfer of data when the transferred PIN code matches the stored PIN code.

As the PIN code is mostly considered confidential information, the PIN code is advantageously transferred via the second communication channel and compared against a PIN code stored in user data of the participant. Further transfer of data, for enabling the participant to take place in a game, or other means might be provided which are only enabled when the transferred PIN code matches the stored PIN code to prevent misuse by other persons entering a wrong PIN code.

Advantageously, the confidential part of the data comprises registration data for registration of the participant in the system, the method comprising the further step of:
i) registrating the participant in the system making use of the registration data. This solves the further problem that a registration of a new participant via e.g. SMS is time consuming and difficult. To achieve a low threshold for attracting new, mostly young player, for playing in the lottery game, a user convenient, simple yet secure way for registration of the participant is required. This is solved in that non-confidential registration data is transferred via a first communication channel such as an SMS channel, while confidential data, such a bank account info and other personal data are transferred via the second, secure communication channel which is set up in response to the transfer of the non-confidential part of the data via the first communication channel. It is for example possible that the system calls back a new, to be registered participant via a voice response system, requesting the new participant to enter confidential information. Also, this method for registration is user friendly, as entering long strings of numbers, such as bank account numbers or addresses via SMS is time consuming and in practice easily leads to wrong entries. Further, a lot of users consider it somewhat inconvenient to type in long numbers using SMS.

Advantageously, the method comprises the further steps of:
j) creating an electronic wallet for the participant, when the participant wins a price; and
k) transferring an amount of the price to the electronic wallet. This solves the problem that billing for a lottery ticket by a telecom company is normally costly, as the telecom operator will demand a reward for the fact that they collect the money and thus deduct a percentage of the money to cover his costs. Therefore, the creation of an electronic wallet for the participant is of advantage, as a payment out of the electronic wallet will not be subjected to a deduction of a percentage by a telecom operator. According to the state of the art, the creation of an electronic wallet however is not user friendly, as this requires entry of data via for example an internet connection or filling in papers. Consequently, only after some time, when the electronic wallet for the respective participant has been validated, the participant can make use of the wallet. In this advantageous embodiment, the invention intends to provide a very easy and automatic way to create an electronic wallet for a participant. First, after registration, the participant plays in the usual way via his telephone account so that the telecom operator collects the money that the participant pays for entering the lottery. At the moment however, when the participant wins a price, an electronic wallet is created for the participant automatically, and the amount of the price is transferred to the electronic wallet. Advantageously, the step of creating an electronic wallet for the participant, when the participant wins a price, comprises the step of:
   j1) sending via the first communication channel a message to the communication device;
   j2) transferring data via the second communication channel to the system; and
   j3) creating the electronic wallet for the participant making use of the data entered in the previous step. Thus, when the participant has won a price, a message is sent to the participant requesting the participant to enter data (such as financial data, e.g. a bank account number, or other required data for creating the electronic wallet), after which the electronic wallet for the participant is created making use of this data. As long as the amount on the electronic wallet is sufficient for charging a fee for a further play from the electronic wallet, the fee is advantageously charged from the electronic wallet, when the participant initiates a further play. Thus, for the further play, no deduction of fees by the telecom operator takes place. The further play can take place at any moment following creation of the wallet. The method for creating an electronic wallet as described above can be applied for any electronic lottery system, and is not limited to a lottery system according to the invention.

Advantageously, the method comprises the steps of:
m) sending via a communication network, an identification message from a pay-out terminal to the system for identifying a participant;
n) establishing a connection with the mobile communication device of the participant via the second communication channel; o) providing an authentication code to the participant via the second communication channel; p) prompting the participant to enter the authentication code on the pay-out terminal; q) transferring the entered code from the terminal to the system; r) sending a pay-out message to the terminal for paying out a price, when the entered authentication code matches the provided authentication code. This provides an easy authentication of a person requesting a pay out of a price which the person claims to have won in the lottery. This advantageous embodiment of the method for authentication of a person for paying out a price, can not only be applied in a lottery system or method according to the invention, but in any electronic lottery system.

Advantageously, the method comprises the steps of:
s) transferring at least one play message between the mobile communication device of the participant and the system for playing in a game; t) charging a first amount to the participant via a mobile telephone operator charging system, associated with the sending of at least one of the at least one play messages, the first amount being transferred to a payment system of a lottery exploitant of the lottery system; u) sending a result message of the game to the communication device of the user; and v) charging a second amount to the participant via the mobile telephone operator charging system, associated with the sending of the result message. This advantageous embodiment provides for a separation of an amount paid for the ticket price and an amount paid to the telecom operator. The amount paid for the ticket price is charged with the sending of at least one of the at least one play messages associated with the playing of the lottery game, while the charging of a second amount associated with the sending of the result message, covers the charges of the telecom operator. Thus, the participant will get better insight in the apportionment of charges into a part of the amount paid for playing in the lottery which is the participant's price for the ticket, and an amount which is charged by the telecom operator for the sending of the messages. This advantageous embodiment allows an operator of the lottery system to more easily comply with required pay-out ratio's. According to the state of the art if it is for example required that 70% of the sum paid by a player is to be paid-out, while the telecom operator deducts 30% from the amount paid for covering expenses, a percentage of zero would be left for the operator of the lottery system. According to the embodiment described however, 30% of the first amount paid would be left as a profit for the operator of the lottery system, as all costs for the telecom operator are comprised in the second amount paid. This advantageous embodiment cannot only be used in a method and system according to the invention, but in any electronic lottery method and system.

To lower money collection risks and to protect participants against excessive play, it is possible in the method according to the invention or in any electronic lottery, to count a number of lottery tickets for a participant in a predetermined time period; and block generation of a lottery ticket, when the number of lottery tickets exceeds a predetermined number.

The computer program according to the invention comprises program instructions for, when loaded into a computer system, carrying out the method according to the invention. The computer program can be carried on a data carrier, such as an optical or magnetic disc, loaded into a memory such as a computer memory, or any other memory means, or carried on a data signal carrier.

Further advantages and features will be come clear from the appended drawing showing non limiting embodiments of the invention, in which:
Fig. 1 shows a system according to the invention;
Fig. 2 shows a flow diagram of an embodiment of the method according to the invention for explaining the working of the system according to fig. 1;
Fig. 3 shows a flow diagram of another aspect of the embodiment of the method according to the invention;
Fig. 4 shows a flow diagram of still another aspect of the embodiment of the method according to the invention;
Fig. 5 shows a flow diagram of a further aspect of the embodiment of the method according to the invention;
Fig. 6 shows a flow diagram of a further aspect of the embodiment of the method according to the invention;
Fig. 7 shows a flow diagram of yet another aspect of the embodiment of the method according to the invention; and
Fig. 8 shows a flow diagram of a yet another aspect of the further embodiment of the method according to the invention.

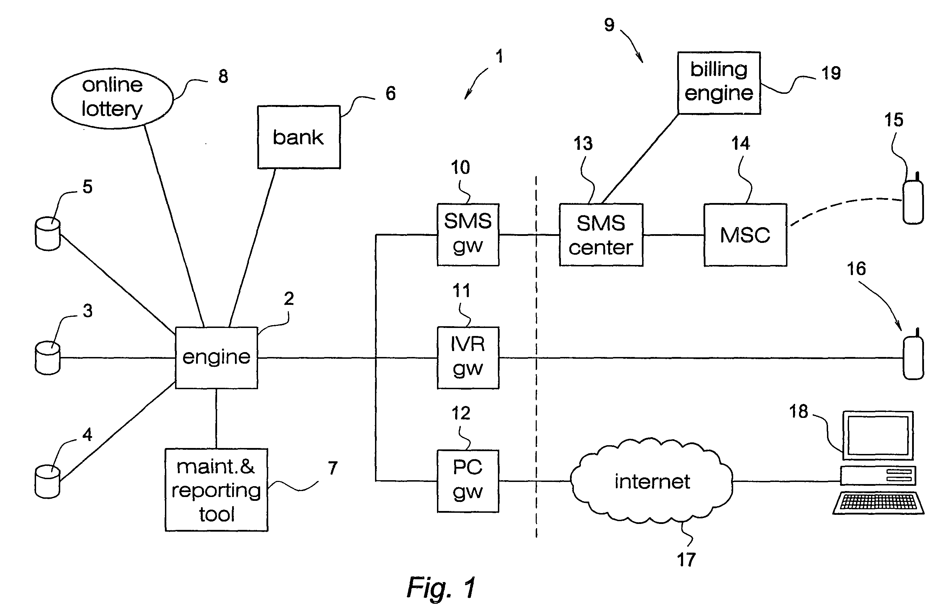

Fig. 1 describes an example of a lottery system 1 according to the invention. The lottery system comprises a transaction engine 2 for processing transactions in the system, such as processing play requests, processing payments etc.. The transaction engine 2 is coupled to a player database 3 comprising player data such as authorisation or PIN codes, telephone numbers, etc.. Further, the transaction engine is coupled to a game database 4 comprising suitable data for executing one or more games. Further, the transaction engine is coupled to an electronic wallet database 5, comprising data related to electronic wallets of players. Also, the transaction engine is coupled to an electronic banking system 6 for processing financial transactions and to a management and reporting tool 7 for providing management and reporting information as well as for allowing an operator to configurate, or otherwise manage the system. Further, in this embodiment, the transaction engine 2 is coupled to an online lottery system 8. Participants to the lottery system can be connected via a communication network, such as a telecommunication network, which is systemically indicated by 9. Therefore, the lottery system 1 is equipped with a number of gateways such as in this example an SMS gateway 10, a voice response gateway 11 and a personal computer gateway 12. The SMS gateway 10 is connected to an SMS centre 13 of the telecommunication network, for the sending and receiving of SMS messages via a mobile switching centre 14 of the telecommunication network to a mobile communication device 15 of a participant. The telecommunication system 9 also comprises an operator billing engine 19 which is in this example connected to the SMS centre 13. The voice response gateway 11 of the lottery system 1 allows a communication device, such as a mobile communication device of a participant to be connected to the lottery system 1 and communicate via a voice response system. The PC gateway 12 is connected to a network, such as a computer network such as the internet 17, to which a personal computer 18 of a participant can be connected. It will be clear to the skilled reader that the communication device 15, 16, 18 of the participant can alternatively comprise a java phone, a WAP phone, an I-mode phone or any other stationary or mobile communication device.

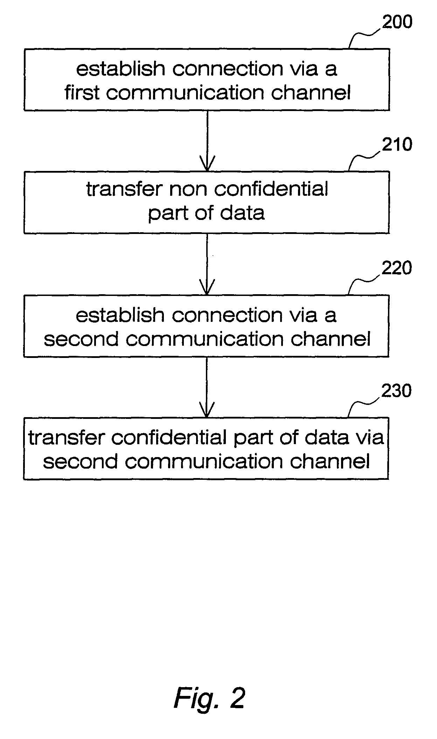

The working of the system according to fig. 1, as far as relevant for understanding the invention, will be explained referring to figs. 2-8.

In the flow diagram in fig. 2, in step 200 a connection between a mobile communication device 15 of a participant and the system 1 is established. The connection can e.g. be a messaging connection, such as an SMS connection via the SMS gateway 10. Then, in step 210 a non-confidential part of data is transferred between the communication device 15 and the system 1 via this communication channel. In response, in step 220 a connection is established between the communication device 15 and the system 1 via a second communication channel, in this example a voice response channel.As a result, the communication device 15 communicates with the system 1 via the voice response gateway 11. The second connection, such as the voice response connection can advantageously and for convenience of the particpant be established by the system 1. Once the connection has been established in step 230, a confidential part of the data is transferred via the second communication channel between the system 1 and the participant. Advantageously, the device used by the participant for the transfer of the confidential part of the data is the same device as used for transfer of the non-confidential part of the data. It is however also possible that for each communication channel a different user device is applied, so that a mobile communication device, e.g. a mobile telephone for the first communication channel and a personal computer for the second communication channel.

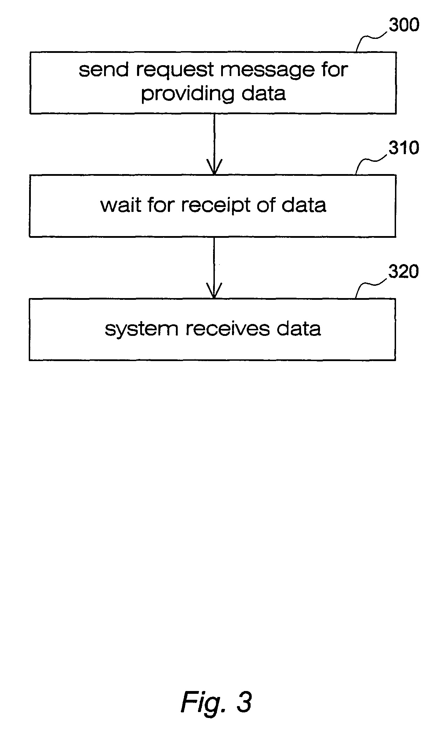

In fig. 3, in step 300 the system sends a message to the communication device which requests the participant to enter specified data. In particular the participant is requested to enter the specified data via the second communication channel. Then, in step 310 the system waits for the receiving of the data from the participant. Then, in step 320 the system receives the data from the communication device, when the data has been entered by the participant. The message sent in step 300 can be a message via the first, or the second communication channel, whichever is preferred from a user convenience stand point. When the second communication channel is a voice response channel it is preferred that the message in step 300 is sent via the voice response channel. Following the request, the participant will enter the requested data which is received by the system in step 320. As a result of these steps, no special provisions, such as encryption of data, dedicated software or other means are required in the communication device used by the participant, as all steps are taken under control of the system, i.e. each time when the system requests information from the participant, the system sends a message to the participant for entering the requested data. As the second communication channel is a secure communication channel, it is not necessary that the communication device of the participant is provided with special provision for securing the data transferred to the system. The steps 300, 310 and 320 can for example form a part of step 230 of fig. 2 for transferring confidential data.

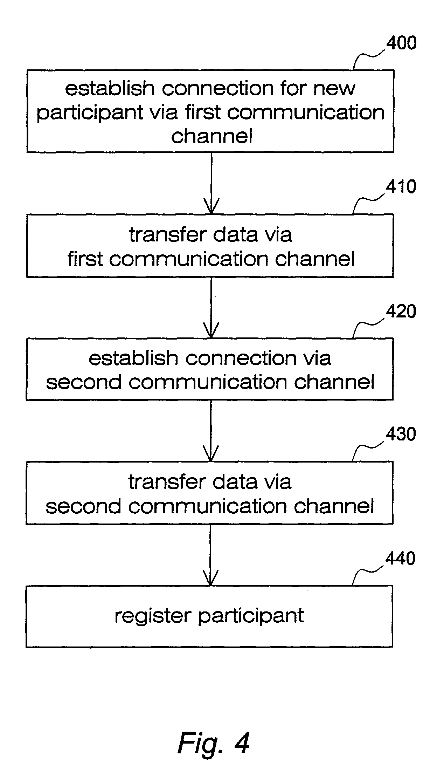

In Fig. 4, in step 400 a connection is established for a new participant who intends to register to the lottery system. The connection in step 400 is established via the first communication channel. Then, in step 410 data of a non-confidential nature, such as the name of telephone number of the participant is transferred via the first communication channel. This transfer of data can for example take place making use of a method similar to the steps described in fig. 3, i.e. the system sends a message via the first communication channel to the communication device requesting the participant to enter certain data, which is followed by a waiting of the system for the data and a receipt of the data from the participant via the first communication channel. When the requested information has been supplied by the future participant in step 410, a second connection via a second communication channel is established in step 420, in this example a voice response channel. In step 430, the participant is now requested to provide information which is in general considered of a more confidential nature via the second communication channel, i.e. via the voice response channel. Therefore, in similarity to the step described in fig. 3, the participant is requested by the voice response system to enter specific data, the system waits for the receipt of the data, and then the data is received by the system. When in step 430 all required data is received by the system, in step 440 the participant is registered in the system making use of the registration data, i.e. the relevant data of the participant is stored in the player database 3.

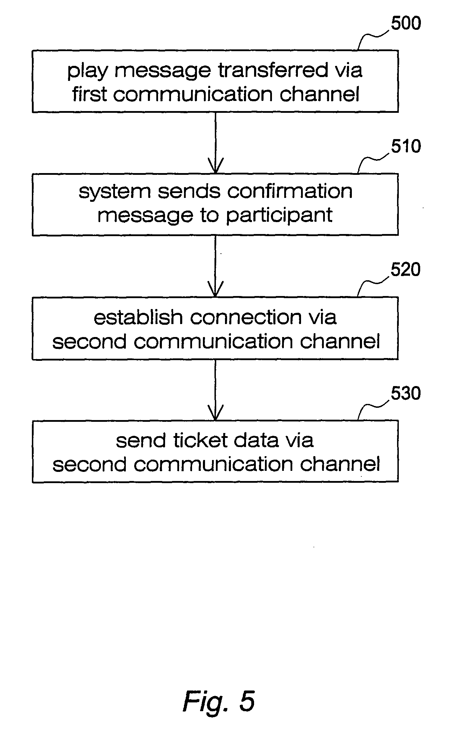

In fig. 5, in step 500 the user sends a play message via the first communication channel to the system. Then, in step 510 the system sends a confirmation message to the communication device of the user that a ticket has been generated. Also, in step 510 the participant is informed by the message that further data of the ticket is available via the second communication channel. If the participant requires access to this information, the participant initiates the establishing of a connection between the communication device (step 520) and the system via the second communication channel which enables the participant in step 530 to obtain more detailed (in general considered confidential) information with regard to the ticket data, such as lottery numbers on the ticket, etc.. The second communication channel can for example be a voice response channel, which allows the participant to select manual options for obtaining the information, i.e. the participant is for example invited to press 1 for obtaining ticket information, etc..

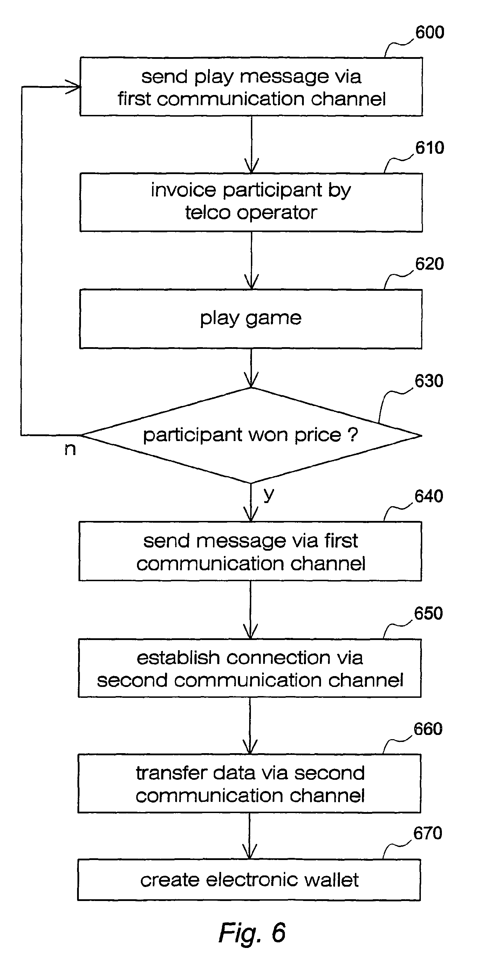

In fig. 6, in step 600 the participant sends a play message to the system. Then, in step 610 a monetary amount is invoiced to the participant by the operator of the telecommunication system. This is performed by the operator billing engine 19. Then, in step 620 a game takes place. In step 630 it is determined if the participant has won a price. If this is not the case, the system waits for a further play message, continuing with steps 600, 610 and 620. If however, in step 630 it is determined that the participant has won a price, in step 640 a creation of an electronic wallet for the participant is initiated by sending a message via the first communication channel to the communication device of the participant. This message informs the participant that he has won a price and further informs the participant that the monetary amount won by the participant will be transferred to an electronic wallet. Therefore, the participant is requested to enter further data. To be able to securely receive this data, in step 650 a connection via the second communication channel is established by the system, followed in step 660 by the transfer of data via the second communication channel, such as the voice response system in a manner similar to described above. Then, in step 670 an electronic wallet is created for the participant making use of the data entered in step 660 and possibly other data already available in the player database 3. The electronic wallet is stored in the electronic wallet database 5. Now, when the participant sends a play message, according to step 600, billing is not established via the operator of the telecommunication system, but directly by deducting the amount from the electronic wallet. If the amount on the electronic wallet is lower than a fee required for a further play, a message is send to the participant inviting the participant to transfer an amount to his electronic wallet. This message is transferred via the first communication channel but could also sent via the second communication channel, if considered more appropriate from a security perspective.

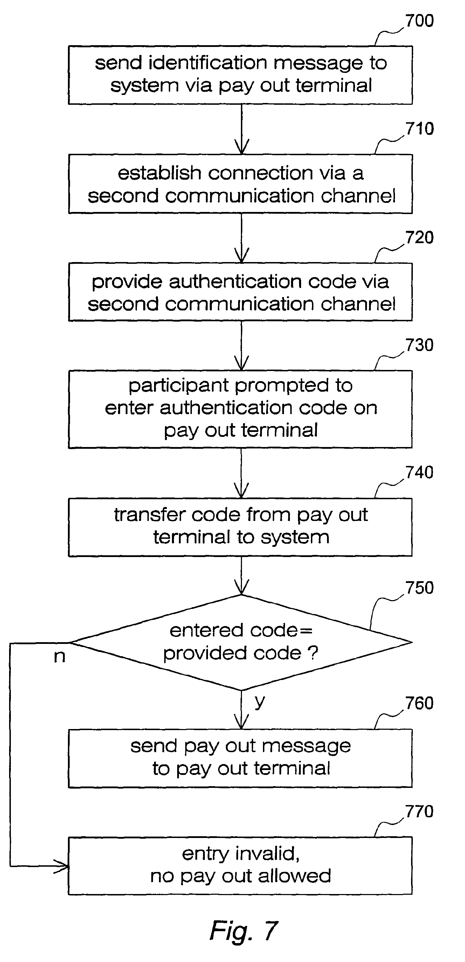

In fig. 7 steps are described for authenticating a person for pay out of a price. At a pay-out terminal, for example in a shop, retail outlet, etc., an identification message is entered in a pay out terminal for identifying the participant which requests of a price (step 700). The identification message can for example comprise a name of the participant, postal code, address, telephone number or any other suitable data to identify the participant. The system, which receives this data, for example via the internet 17 and the PC gateway 12, now establishes a connection with a mobile communication device of the participant via the second communication channel, for example via the voice response gateway 11, as depicted in step 710. Then, in step 720 an authentication code is provided to the participant via the second communication channel, i.e. for example via a voice response system. Then, in step 730, the participant is prompted on the pay out terminal to enter the authentication code which the participant just received via the second communication channel. After entry of the code by the participant, the code is transferred in step 740 to the system. For this transfer, a secure protocol such as https can be supplied, or any other secure protocol for transferring data via a network. Then, in step 750 the system compares the entered authentication code with the provided authentication code, and if identical, in step 760 a message is sent by the system to the pay out terminal for paying out a price. The information in this message can for example comprise the amount to be paid etc.. Otherwise, if the codes are not identical, in step 770 a message is send to the pay out terminal that entry of the code is not valid and that no pay out is allowed. Thus, a simple algorithm for authentication of a participant is provided. As a code is transferred in a secure manner from the system via the second communication channel to the communication device of the participant, a check is performed if the person requesting pay out of the price is indeed carrying the particular communication device with which participation in a game has taken place and with which the price has been won. For further security it is of course possible that the user is requested to enter one or more PIN codes, provide personal data, such as his address, his postal code, or any other information which is already available in the player database. This information provided by the participant is compared with the information in the player database 3 for verification if the person is indeed entitled to a pay out of the price. The pay out terminal can for example be connected to the system via the internet 17, it is for example possible that the pay out terminal is identical or similar to the personal computer 18. Thus, the pay-out terminal can simply be a personal computer or other device with a secure connection via the internet to the central system.

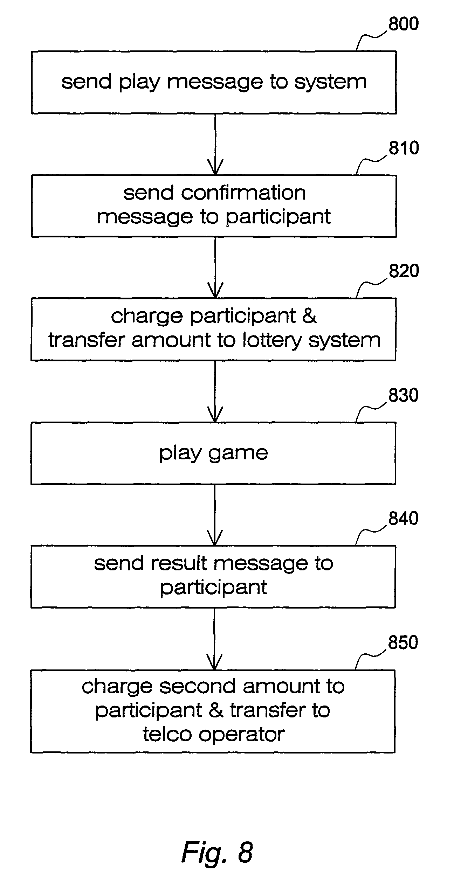

In fig. 8 steps are described for a separate charging of a fee for participating in the lottery system and a fee for sending messages via the communication network. In step 800, the participant sends a play message. Then, in step 810 the participant receives a confirmation message that a lottery ticket has been drawn, the message comprising e.g. a lottery ticket number and a drawing number. Also, the message comprises information on the amount to be invoiced for the lottery. Then, in step 820 which can take place for example simultaneously with step 810, the amount is charged to the participant, e.g. to the telephone bill or the pre-paid account of the participant. This amount is transferred in full to the lottery system 1. Then in step 830 the game takes place. In step 840 a result message is sent to the participant informing the participant about the outcome of the drawing as well as informing him about charges by the telecom operator for the sending of one or more of the messages. Then, in step 850 which can for example take place simultaneously with step 840, the amount mentioned in step 840 is charged to the participant. This charging can take place by the operator billing engine 19. Also, taxes, such as a Value Added Tax (VAT) can be included in the amount of step 840.

In any of the examples described above, the first communication channel can for example be a Short Message Service SMS channel, also, any other suitable communication channel, such as MMS can be applied. The second communication channel can in any of the above embodiments for example comprise a voice response channel, an internet connection, or a wireless access protocol, WAP channel. Also in the system as described above, it is possible that the system waits for a receipt of an accept message from the telecom operator, prior to issuing a lottery ticket for the participant. Also, it is possible that further authentication of the participant takes place, for example by detecting a telephone number of the mobile communication device with which the participant intends to play, by requesting the participant to enter a PIN code, and to compare the telephone number and/or the PIN code against data stored in the player database 3.

The communication devices 15, 16 and personal computer 18 can be separate communication devices, however it is also possible that two or more of these devices are integrated into a single communication device. The communication device can for example comprise a mobile telephone, a mobile phone using SMS, MMS or EMS, a java phone, WAP phone, I mode phone or any other suitable communication device. The telecommunication network 9 can be a mobile communication network, such as a GSM network, a GPRS network, a third generation network and can also comprise a wired network such as an internet, a public wired telephone system, or any other suitable communication meanes.

With the system and method according to the invention, a high user convenience can be combined with a high security, as a participant initiates an action such as sending a play message via a first communication channel which can be a simple, wide spread and user convenient communication channel, such as SMS, and which does not need to be secure. Following this transfer further, confidential information is to be transferred via a second communication channel which is secure and which allows user convenient transfer of data such as a voice response channel. The second communication channel can however comprise any other suitable communication channel such as HTTPS, Java encryption such as bouncy castle, WLTS, PKI, Simtoolkit, e-mail with PGP, etc..

## Claims

1. A method for transferring data between a lottery system and a participant to the lottery system, the participant communicating with the lottery system via a mobile communication device such as a mobile telephone, the method comprising the steps of:
a) transferring a non confidential part of the data between the communication device and the system via a first communication channel;
b) in response to the transfer of the non confidential part of the data, transferring a confidential part of the data between the participant and the system via a second, secure communication channel.

2. The method according to claim 1, wherein the first communication channel comprises a message channel such as a short message service (SMS) channel, a multimedia service (MMS) channel or and enhanced messaging service (EMS) channel.

3. The method according to claim 1 or 2, wherein the second communication channel comprises a voice response channel between the communication device and the system.

4. The method according to any of the preceding claims, wherein the second communication channel comprises an internet connection or Wireless Access Protocol WAP channel.

5. The method according to any of the preceding claims, wherein step b) is initiated by the system or by the communication device.

6. The method according to any of the preceding claims, wherein step b) comprises the steps of:
b1) sending a message by the system to the communication device requesting the participant to enter specified data; and
b2) receiving by the system the data from the communication device, upon entry of the specified data by the participant.

7. The method according to any of the preceding claims, wherein step a) comprises the step of:
a1) sending a confirmation message from the system to the mobile communication device that a ticket for participating in a game is generated; and wherein step b) comprises the step of:
b3) sending ticket data comprised in the ticket via the second communication channel to the communication device.

8. The method according to any of the preceding claims, wherein the system waits for a receipt of an accept message from a telecom operator, prior to issuing a lottery ticket for the participant.

9. The method according to any of the preceding claims, comprising the further steps of:
c) detecting by the system a telephone number of the mobile communication device;
d) comparing the telephone number against a telephone number stored in user data of the participant; and
e) enabling transfer of data when the detected telephone number matches the stored telephone number.

10. The method according to any of the preceding claims, comprising the further steps of:
f) transferring a PIN code entered by the participant via the second communication channel to the system;
g) comparing the PIN code against a PIN code stored in user data of the participant;
h) enabling transfer of data when the transferred PIN code matches the stored PIN code.

11. The method according to any of the preceding claims, wherein the confidential part of the data comprises registration data for registration of the participant in the system, and wherein the method comprises the further step of:
i) registrating the participant in the system making use of the registration data.

12. The method according to any of the preceding claims, further comprising the step of
j) creating an electronic wallet for the participant, when the participant wins a price; and
k) transferring an amount of the price to the electronic wallet.

13. The method according to claim 12, wherein step j) comprises the steps of:
j1) sending via the first communication channel a message to the communication device;
j2) transferring data via the second communication channel to the system; and
j3) creating the electronic wallet for the participant making use of the data entered in step j2).

14. The method according to claim 12 or 13, wherein the method comprises the further step of:
l) charging a fee from the electronic wallet, when the participant initiates a further play.

15. The method according to any of claims 12 - 14, comprising the further step of, when an amount in the electronic wallet is lower than a fee required for a further play, sending a message to the participant inviting the participant to transfer a monetary amount to his electronic wallet.

16. The method according to any of the preceding claims, further comprising the steps of:
m) sending via a communication network, an identification message from a pay-out terminal to the system for identifying a participant;
n) establishing a connection with the mobile communication device of the participant via the second communication channel
o) providing an authentication code to the participant via the second communication channel;
p) prompting the participant to enter the authentication code on the pay-out terminal;
q) transferring the entered code from the terminal to the system;
r) sending a pay-out message to the terminal for paying out a price, when the entered authentication code matches the provided authentication code.

17. The method according to any of the preceding claims, comprising the steps of:
s) transferring at least one play message between the mobile communication device of the participant and the system for playing in a game;
t) charging a first amount to the participant via a mobile telephone operator charging system, associated with the sending of at least one of the at least one play messages, the first amount being transferred to a payment system of a lottery exploitant of the lottery system;
u) sending a result message of the game to the communication device of the user; and
v) charging a second amount to the participant via the mobile telephone operator charging system, associated with the sending of the result message.

18. The method according to any of the preceding claims, comprising the further steps of:
counting a number of lottery tickets for a participant in a predetermined time period; and
blocking generation of a lottery ticket, when the number of lottery tickets exceeds a predetermined number.

19. A computer program comprising program instruction for, when loaded into a computer system, carrying out the method according to any of the preceding claims.

20. The computer program according to claim 19, carried on a data carrier, loaded into a memory or carried on a data signal carrier.

21. A lottery system comprising a computer provided with a computer program according to claim 19 or 20.
